# EUROPÄISCHE PATENTSCHRIFT

(11) **EP 2 671 445 B1**
(45) Veröffentlichungstag und Bekanntmachung des Hinweises auf die Patenterteilung: **18.02.2015**
(21) Anmeldenummer: 13002891.3
(22) Anmeldetag: 05.06.2013
(51) Int. Cl.: A01G 3/053

(54) **Heckenschere mit vereinfachter Messermontage**
Hedge trimmer with easy assembly blade
Taille haie avec assemblage de lames facile

(30) Priorität: 09.06.2012 DE 102012011546
(43) Veröffentlichungstag der Anmeldung: 11.12.2013
(73) Patentinhaber: Andreas Stihl AG & Co. KG, 71336 Waiblingen (DE)
(72) Erfinder: Kaupp, Klaus, D-70329 Stuttgart (DE)
(74) Vertreter: Reinhardt, Annette

(56) Entgegenhaltungen:
- EP-A1- 2 294 907
- DE-A1- 19 829 132
- US-A- 5 771 583

## Beschreibung

Die Erfindung betrifft ein handgeführtes Arbeitsgerät der im Oberbegriff des Anspruchs 1 angegebenen Gattung.

Aus der DE 198 29 132 A1 ist ein handgeführtes Arbeitsgerät, nämlich eine Heckenschere bekannt, an deren Messerbalken eine Deckleiste mit schlüssellochartigen Öffnungen angeordnet ist. Die Messerbalken und die Deckleiste sind von Befestigungsbolzen durchragt. Die Deckleiste wird im Bereich der Aufsetzabschnitte auf die Befestigungselemente aufgesetzt und dann in Längsrichtung der Messerbalken verschoben, bis die Befestigungselemente im Bereich der Fixierabschnitte angeordnet sind. Dadurch, dass alle schlüssellochartigen Öffnungen gleich ausgebildet sind, müssen alle Öffnungen gleichzeitig aufgesetzt werden und die Fixierabschnitte gleichzeitig in Eingriff gebracht werden. Dies ist aufgrund der großen Länge der Deckleiste schwierig.

Der Erfindung liegt die Aufgabe zugrunde, ein handgeführtes Arbeitsgerät der gattungsgemäßen Art zu schaffen, dessen Messerbalken einfach montierbar sind.

Diese Aufgabe wird durch ein handgeführtes Arbeitsgerät mit den Merkmalen des Anspruchs 1 gelöst.

Es ist vorgesehen, dass die dem Aufsetzabschnitt zugewandten Seiten der Fixierabschnitte und die dem Fixierabschnitt zugewandten Seiten der zugeordneten Befestigungselemente unterschiedliche Abstände besitzen. Dabei sind die Abstände der Befestigungselemente größer, so dass zuerst eines der beiden Befestigungselemente den zugeordneten Fixierabschnitt hintergreifen kann und anschließend bei weiterem Verschieben der Deckleiste das andere der beiden Befestigungselemente am zugeordneten Fixierabschnitt fixiert werden kann. Dadurch kann der Bediener die Deckleiste nacheinander an den einzelnen Öffnungen fixieren. Dadurch wird die Handhabung vereinfacht. Für die Abstände ist dabei jeweils die Stelle von Befestigungsabschnitt und Fixierabschnitt maßgeblich, an der der Fixierabschnitt bei der Fixierung der Deckleiste zuerst mit dem Befestigungsabschnitt in Eingriff kommt und den Befestigungsabschnitt hintergreift. Die Montage einer Vielzahl von Befestigungselementen wie bei üblichen, durch Schrauben miteinander verbundenen Messerbalken, entfällt aufgrund der Gestaltung der Deckleiste. Die Breite der Öffnungen ist dabei in der Ebene der Messerbalken senkrecht zur Bewegungsrichtung des mindestens einen angetriebenen Messerbalkens gemessen und die Längsrichtung in Bewegungsrichtung.

Vorteilhaft besitzt die erste Deckleiste mehr als zwei Öffnungen. Dadurch, dass eine größere Anzahl von Öffnungen vorgesehen wird, kann eine sichere Fixierung der Deckleiste über ihre gesamte Länge erreicht werden. Die Differenz zwischen dem ersten Abstand benachbarter Öffnungen und dem zweiten Abstand benachbarter Befestigungselemente ist dabei vorteilhaft für alle Öffnungen gleich groß. Dadurch ist der Weg, um den die Deckleiste weiterbewegt werden muss, bis das nächste Befestigungselement vom Fixierabschnitt der zugeordneten Öffnung hintergriffen wird, konstant. Dadurch wird die Montage vereinfacht.

Vorteilhaft besitzt der Fixierabschnitt der ersten Öffnung vom Aufsetzabschnitt bis zu der Position, in der sich das Befestigungselement bei fixierter erster Deckleiste befindet, eine erste Länge in Längsrichtung der Messerbalken. Der Fixierabschnitt der zweiten Öffnung besitzt vom Aufsetzabschnitt bis zu der Position, in der sich das Befestigungselement bei fixierter erster Deckleiste befindet, eine zweite Länge, die größer als die erste Länge ist. Durch die unterschiedliche Länge der Fixierabschnitte der schlüssellochförmigen Öffnungen greifen die Fixierabschnitte nicht gleichzeitig hinter die Köpfe der Befestigungselemente, sondern nacheinander.

Vorteilhaft besitzen die Messerbalken ein erstes, einem Gehäuse des Arbeitsgeräts zugewandtes Ende und ein zweites, dem Gehäuse des Arbeitsgeräts abgewandtes Ende. Die Deckleiste wird vorteilhaft zuerst an ihrem dem Gehäuse des Arbeitsgeräts abgewandten Ende fixiert Hierzu ist insbesondere vorgesehen, dass die Länge der Fixierabschnitte der Öffnungen vom Aufsetzabschnitt bis zu der Position, in der sich das Befestigungselement bei fixierter erster Deckleiste befindet, umso größer ist, je weiter die Öffnung vom ersten Ende entfernt ist. Dadurch kann der Bediener ausgehend vom freien Ende der Messerbalken die Deckleiste an einem Befestigungselement nach dem anderen fixieren. Vorteilhaft ist die Differenz der Längen der Fixierabschnitte benachbarter schlüssellochförmiger Öffnungen für alle benachbarten Öffnungen gleich. Dadurch ist der Weg, um den die Deckleiste zur Fixierung des zugeordneten Befestigungselements in Längsrichtung verschoben werden muss, bei jedem Befestigungselement gleich. Die Gesamtlänge von Aufsetzabschnitt und Fixierabschnitt ist dabei vorteilhaft bei allen schlüssellochförmigen Öffnungen etwa gleich. Dadurch sind die Befestigungselemente in fixierter Stellung der Deckleiste jeweils am Ende der zugeordneten Fixierabschnitte angeordnet.

Vorteilhaft ist die erste Deckleiste über ein Sicherungsmittel in ihrer Lage gesichert. Das Sicherungsmittel verhindert, dass die Deckleiste sich im Betrieb ungewollt in Längsrichtung der Messerbalken bewegen kann und dadurch ein oder mehrere Befestigungselemente in den Bereich der zugeordneten Aufsetzabschnitte gelangen können und die Deckleiste sich lösen kann. Eine einfache Gestaltung ergibt sich, wenn das Sicherungsmittel ein gegenüber einem Gehäuse des Arbeitsgeräts fixiertes Rastelement ist, das in fixierter Stellung der Deckleiste in einer Sicherungsöffnung in der ersten Deckleiste eingerastet ist. Eine besonders einfache Gestaltung ergibt sich, wenn das Rastelement eine Blattfeder ist. Die Blattfeder besitzt vorteilhaft eine Kante, die an der Sicherungsöffnung einrastet. Es kann jedoch auch vorgesehen sein, dass das Sicherungsmittel eine Sicherungsschraube ist, die in ein mit dem Gehäuse des Arbeitsgeräts fest verbundenes Bauteil eingeschraubt ist und die die erste Deckleiste gegenüber dem Gehäuse fixiert. Die Sicherungsschraube fixiert die Deckleiste vorteilhaft kraftschlüssig und formschlüssig, indem sie die Deckleiste gegen die Messerbalken klemmt. Zur Montage der Deckleiste muss dadurch nur die Deckleiste aufgesetzt, in Längsrichtung verschoben und anschließend eine einzige Schraube eingeschraubt werden, so dass sich eine einfache und schnelle Montage der Deckleiste und damit ein einfacher und schneller Messerwechsel ergibt.

Eine vorteilhafte Gestaltung ergibt sich, wenn das Arbeitsgerät eine zweite Deckleiste besitzt, die an der der ersten Deckleiste gegenüberliegenden Seite der Messerbalken angeordnet ist und die an einem Gehäuseteil des Arbeitsgeräts fixiert ist. Das Sicherungsmittel ist dabei insbesondere an der zweiten Deckleiste fixiert. Durch die Anordnung einer ersten und einer zweiten Deckleiste ergibt sich eine hohe Stabilität des Werkzeugs. An den Anlageflächen der Befestigungselemente an den Deckleisten findet keine Relativbewegung statt, so dass sich ein stabiler Aufbau ergibt.

Vorteilhaft besitzt das Arbeitsgerät ein Getriebe, über das mindestens einer der Messerbalken angetrieben ist. Eine schnelle und einfache Montage der Messerbalken kann erreicht werden, wenn der mindestens eine hin- und hergehend angetriebene Messerbalken eine Öffnung besitzt, mit der er auf ein mit dem Getriebe in Wirkverbindung stehendes Koppelelement aufgesetzt ist. Die Messerbalken müssen dadurch nicht am Getriebe oder damit in Wirkverbindung stehenden Komponenten verschraubt werden, sondern werden lediglich in einer Richtung senkrecht zur Ebene der Messerbalken aufgesetzt. Das Koppelelement ist vorteilhaft ein Montagebolzen. Die Sicherung des mindestens einen angetriebenen Messerbalkens an dem Koppelelement erfolgt vorteilhaft über die Deckleiste, die ein Abnehmen des Messerbalkens in axialer Richtung des Koppelelements, also senkrecht zur Ebene der Messerbalken, verhindert.

Ein Ausführungsbeispiel der Erfindung wird im Folgenden anhand der Zeichnung erläutert. Es zeigen:
- Fig. 1: eine schematische, perspektivische Darstellung einer Heckenschere,
- Fig. 2: eine Ansicht von oben auf die Messerbalken und das Messerbalkengehäuse der Heckenschere aus Fig. 1,
- Fig. 3: eine perspektivische Darstellung der Heckenschere im Bereich des Messerbalkengehäuses bei geteiltem Messerbalkengehäuse,
- Fig. 4 und 5: perspektivische Explosionsdarstellungen von Messerbalkengehäuse und Messerbalken der Heckenschere,
- Fig. 6: einen vergrößerten Ausschnitt einer Ansicht von unten auf die Messerbalken und die Deckleiste,
- Fig. 7 bis 11: eine Ansicht von unten auf die Messerbalken in unterschiedlichen Positionen der Deckleiste,
- Fig. 12: einen Längsschnitt durch das Getriebe und die Messerbalken,
- Fig. 13: eine perspektivische Explosionsdarstellung der Messerbalken und Deckleisten,
- Fig. 14: eine vergrößerte ausschnittsweise Darstellung der Heckenschere aus Fig. 12 im Bereich der Anbindung der Messerbalken,
- Fig. 15 und 16: Schnittdarstellungen durch Ausführungsbeispiele der Heckenschere im Bereich der Anbindung der Messerbalken.

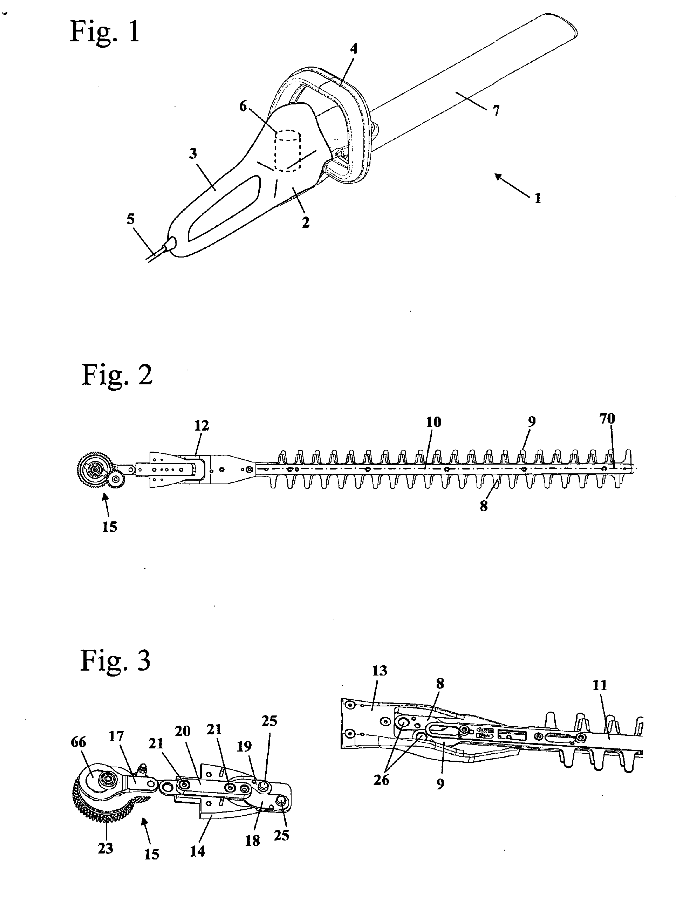

Fig. 1 zeigt als Ausführungsbeispiel für ein handgeführtes Arbeitsgerät eine Heckenschere 1. Die Heckenschere 1 besitzt ein Gehäuse 2, an dem ein hinterer Handgriff 3 und ein Bügelgriff 4 festgelegt sind. Der Bügelgriff 4 ist zweiteilig ausgebildet. Im Gehäuse 2 ist ein Antriebsmotor 6 angeordnet, der im Ausführungsbeispiel als Elektromotor ausgebildet ist und über ein Anschlusskabel 5 mit Energie versorgt ist. Der Antriebsmotor 6 kann jedoch auch von einer Batterie, insbesondere einem Akkumulator mit Energie versorgt werden. Der Antriebsmotor 6 kann auch ein Verbrennungsmotor, insbesondere ein gemischgeschmierter Verbrennungsmotor sein. Der Antriebsmotor 6 kann nur dann in

Betrieb genommen werden, wenn die beiden Abschnitte des Bügelgriffs 4 vom Bediener zusammengedrückt werden. Dadurch ist sichergestellt, dass im Betrieb eine Hand des Bedieners am Bügelgriff 4 angeordnet ist. Der Antriebsmotor 6 treibt die in Fig. 2 gezeigten Messerbalken 8 und 9 in Längsrichtung 70 der Messerbalken 8 und 9 hin- und hergehend an. In Fig. 1 sind die Messerbalken 8 und 9 von einem Schutz 7 abgedeckt, der beim Transport und zur Aufbewahrung der Heckenschere 1 an den Messerbalken 8 und 9 angeordnet wird.

Wie Fig. 2 zeigt, werden die Messerbalken 8 und 9 über ein Getriebe 15 angetrieben. Die Messerbalken 8 und 9 ragen mit einem Ende in ein Messerbalkengehäuse 12, in dem sie mit dem Getriebe 15 verbunden sind. Am oberen Messerbalken 8 ist eine zweite Deckleiste 10 angeordnet. Eine erste, an der Unterseite der Messerbalken angeordnete Deckleiste ist in Fig. 2 nicht sichtbar.

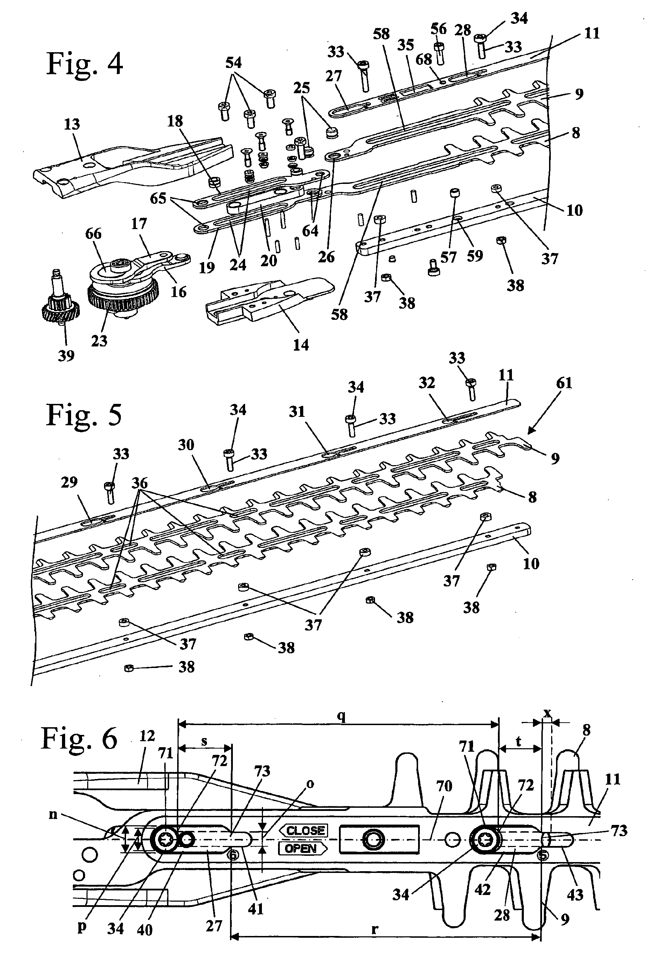

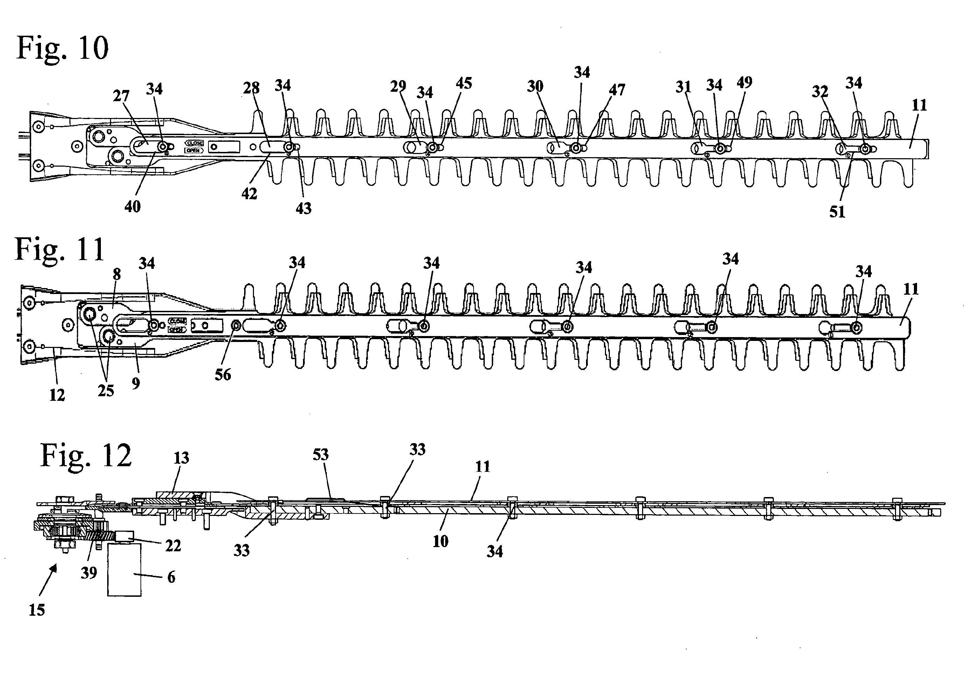

Wie Fig. 3 und Fig. 4 zeigen, besitzt das Messerbalkengehäuse 12 ein erstes Gehäuseteil 13, durch das die Messerbalken 8 und 9 gesteckt sind. Das erste Gehäuseteil 13 ist an seiner Oberseite von einem zweiten Gehäuseteil 14 verschlossen. Die Oberseite ist die beim Abstellen der Heckenschere 1 auf einer ebenen Unterlage in Wirkrichtung der Schwerkraft oben liegende Seite, und die Unterseite ist die in dieser Abstellposition der Unterlage zugewandte, unten liegende Seite. Wie Fig. 3 zeigt, ist am zweiten Gehäuseteil 14 ein Führungsstück 20 festgelegt, das mit in Fig. 3 nicht gezeigten Schrauben und mit Führungselementen 21 fixiert ist. Im Ausführungsbeispiel sind zwei Führungselemente 21 vorgesehen, die hülsenförmig ausgebildet sind. Die Führungselemente 21 ragen in Führungsnuten 24 (Fig. 4) von zwei Zwischenstücken 18 und 19. Dadurch sind die Zwischenstücke 18 und 19 in Längsrichtung der Messerbalken 8 und 9 am zweiten Gehäuseteil 14 geführt. Die Führungsnuten 24 sind im Ausführungsbeispiel als Langlöcher ausgebildet. Die Zwischenstücke 18 und 19 besitzen an ihren den Messerbalken 8 und 9 zugewandten Enden die in Fig. 4 gezeigten Öffnungen 64, über die sie mit den Messerbalken 8 und 9 verbunden werden können. Die Zwischenstücke 18 und 19 sind seitlich abgekröpft, so dass die Öffnungen 64 im Betrieb nebeneinander liegen. Entsprechend sind auch die Messerbalken 8 und 9 seitlich abgekröpft. An ihrem dem Getriebe 15 zugewandten Ende besitzen die Zwischenstücke 18 und 19 Öffnungen 65, die übereinanderliegend angeordnet sind und in die in Fig. 3 nicht gezeigte Zapfen von Pleueln 16 und 17 des Getriebes 15 eingreifen. Die Pleuel 16 und 17 sind über einen in den Figuren 3 und 4 gezeigten Exzenter 66 hin- und hergehend angetrieben. Der Exzenter 66 ist drehfest mit einem Zahnrad 23 verbunden, das über ein Zwischenrad 39 von einem Antriebsritzel 22 (Fig. 12) rotierend angetrieben ist. Das Antriebsritzel 22 ist vorteilhaft direkt auf der Abtriebswelle des Antriebsmotors 6 angeordnet. Die Anordnung des Antriebsmotors 6 am Getriebe 15 ist in Fig. 12 schematisch gezeigt.

Wie Fig. 3 zeigt, sind an den Enden der Zwischenstücke 18 und 19, die den Messerbalken 8 und 9 zugewandt liegen, Montagebolzen 25 angeordnet. Auf die Montagebolzen 25 werden die Messerbalken 8 und 9 mit ihren Montageöffnungen 26 lediglich aufgesetzt. Das Aufsetzen der Messerbalken 8 und 9 auf die Montagebolzen 25 ist einfach und ohne Werkzeug möglich.

Das zweite Gehäuseteil 14 ist über die in Fig. 4 gezeigten Schrauben 54 am Gehäuse 2 der Heckenschere 1, insbesondere an einem Getriebegehäuse der Heckenschere 1, festgelegt. Das erste Gehäuseteil 13 ist am zweiten Gehäuseteil 14 verschraubt. Fig. 4 zeigt auch die Montagebolzen 25 und die zugeordnete Montageöffnung 26 des Messerbalkens 9. Am ersten Gehäuseteil 13 des Messerbalkengehäuses 12 ist die in Fig. 4 gezeigte zweite, obere Deckleiste 10 fixiert. Die Deckleiste 10 ragt dabei in eine Nut im zweiten Gehäuseteil 14. Dadurch ergibt sich eine stabile Fixierung der zweiten Deckleiste 10 am Messerbalkengehäuse 12.

Die erste Deckleiste 11 ist an der unteren Längsseite des Messerbalkens 9 angeordnet und die zweite Deckleiste 10 an der gegenüberliegenden, in Abstellposition nach oben weisenden Längsseite des Messerbalkens 8. Zur Befestigung der Messerbalken 8 und 9 und der Deckleisten 10 und 11 aneinander sind Befestigungselemente vorgesehen, die im Ausführungsbeispiel als Schrauben 33 ausgebildet sind. Anstatt der Schrauben 33 können auch anders gestaltete Befestigungselemente, beispielsweise Bolzen oder dgl. vorgesehen sein. Die Schrauben 33 besitzen jeweils einen Kopf 34, der einen verbreiterten Durchmesser besitzt und der benachbart zur ersten Deckleiste 11 angeordnet ist. Die erste Deckleiste 11 besitzt Öffnungen 27, 28, 29, 30, 31, 32, die jeweils schlüssellochförmig ausgebildet sind. Durch die schlüssellochförmigen Öffnungen 27 bis 32 ragt jeweils eine Schraube 33. An der der zweiten Deckleiste 10 benachbarten Seite sind die Schrauben 33 in die Deckleiste 10 eingeschraubt und über Muttern 38 gesichert. Die Schrauben 33 ragen jeweils durch eine Führungshülse 37, die zwischen den Deckleisten 10 und 11 angeordnet ist und die Langlöcher 58 und 36 der Messerbalken 8 und 9 durchragt. Die Führungshülse 37 dient zur Führung der Messerbalken 8 und 9. Wie Fig. 4 zeigt, besitzt die erste Deckleiste 11 zwischen der ersten Öffnung 27 und der zweiten Öffnung 28 eine rechteckförmige Sicherungsöffnung 35. Bei dem in Fig. 4 gezeigten Ausführungsbeispiel ist die Sicherungsöffnung 35 funktionslos. Zwischen der Sicherungsöffnung 35 und der zweiten Öffnung 28 ist ein Loch 68 angeordnet, durch das eine Schraube 56 ragt. Die Schraube 56 ist in eine Gewindebohrung 59 der zweiten Deckleiste 10 eingeschraubt.

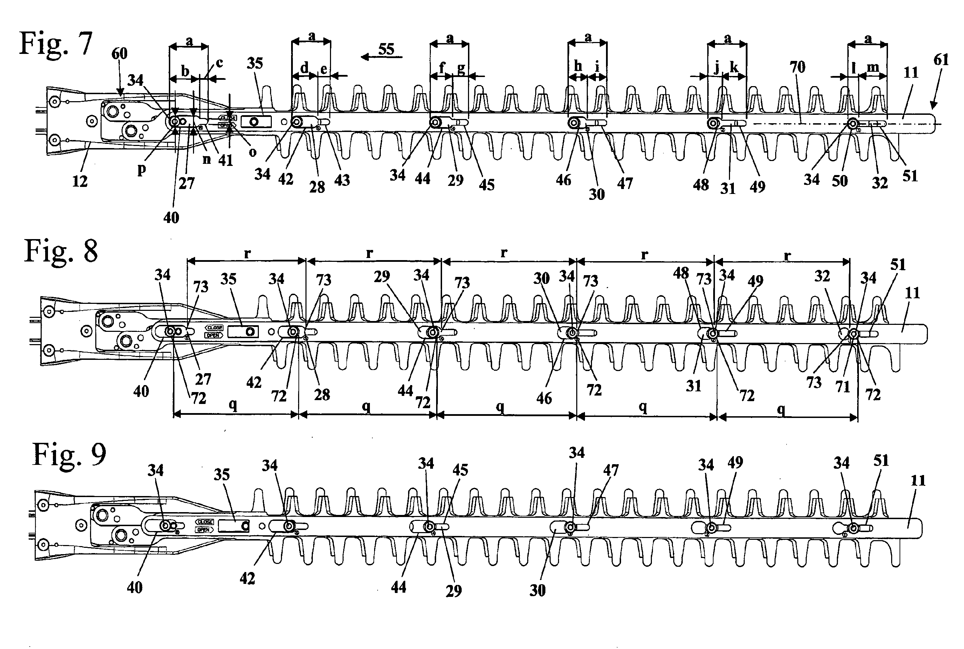

Die Figuren 6 bis 11 zeigen die Gestaltung der schlüssellochförmigen Öffnungen 27 bis 32 im Einzelnen. In Fig. 6 sind die beiden dem ersten Ende 60 (Fig. 7) zugewandten Öffnungen 27 und 28 vergrößert gezeigt. Die erste, benachbart zum Messerbalkengehäuse 12 und zu dem ersten Ende 60 der Messerbalken 8, 9 angeordnete Öffnung 27 besitzt einen Aufsetzabschnitt 40, dessen Breite n etwa so groß oder etwas größer als die Breite p des Kopfs 34 der Schraube 33 ist. An den Aufsetzabschnitt 40 schließt sich in Richtung auf das zweite Ende 61 (Fig. 7) ein Fixierabschnitt 41 an. Der Fixierabschnitt 41 besitzt eine senkrecht zur Längsrichtung 70 gemessene Breite o, die kleiner als die Breite p des Kopfes 34, aber etwas größer als der Nenndurchmesser der Schraube 33 ist.

Der Abschnitt des Kopfes 34, der breiter als der Fixierabschnitt 41 ist und der bei vollständig fixierter Deckleiste 11 von den benachbart zum Fixierabschnitt 41 angeordneten Abschnitten der Deckleiste 11 hintergriffen ist, bildet einen Befestigungsabschnitt 71. Die in Richtung auf das zweite Ende 60 benachbarte Öffnung 28 besitzt einen Aufsetzabschnitt 42 und einen Fixierabschnitt 43. Die dem Fixierabschnitt 41 zugewandte Seite 72 des Befestigungsabschnitts 71 des in der Öffnung 27 angeordneten Kopfs 34 besitzt in nicht fixiertem Zustand der Deckleiste 11 zu der dem Fixierabschnitt 43 zugewandten Seite 72 des Befestigungsabschnitts 71 des in der Öffnung 28 angeordneten Kopfes 34 einen Abstand q. Die Fixierabschnitte 41 und 43 besitzen jeweils eine dem Aufsetzabschnitt 40, 42 der jeweiligen Öffnung 27, 28 zugewandte Seite 73. Die Seiten 73 der benachbarten Fixierabschnitte 41 und 43 besitzen zueinander einen Abstand r, der kleiner als der Abstand q der Befestigungsabschnitte 71 ist. Der Abstand r ist um eine Differenz x kleiner als der Abstand q. Wird die Deckleiste 11 in Richtung auf das erste Ende 60 bewegt, so kommt der Befestigungsabschnitt 71 in der zweiten Öffnung 28 mit dem Fixierabschnitt 43 in Eingriff, nachdem die Deckleiste 11 einen Weg zurückgelegt hat, der einem Abstand t zwischen der Seite 72 des Befestigungselements 71 und der Seite 73 des Fixierabschnitts 43 entspricht. Der Befestigungsabschnitt 71 in der ersten Öffnung 27 kommt erst dann mit dem Fixierabschnitt 41 in Eingriff, wenn die Deckleiste 11 einen Weg zurückgelegt hat, der einem Abstand s zwischen der Seite 72 des Befestigungselements 71 und der Seite 73 des Fixierabschnitts 41 entspricht. Der Abstand s ist dabei um die Differenz x größer als der Abstand t.

Wie Fig. 7 zeigt, besitzen alle schlüssellochförmigen Öffnungen 27 bis 32 die gleiche in Längsrichtung 70 der Messerbalken 8, 9 gemessene Gesamtlänge a. Der Aufsetzabschnitt 40 besitzt eine in Längsrichtung 70 gemessene Länge b und der Fixierabschnitt 41 eine Länge c. Die Länge c des Fixierabschnitts 41 ist vom Aufsetzabschnitt 40 bis zu dem Bereich gemessen, in dem sich die Schraube 33 bei vollständig fixierter erster Deckleiste 11 befindet. Im Ausführungsbeispiel ist die Schraube 33 bei fixierter Deckleiste 11 am Ende der schlüssellochförmigen Öffnung 27 angeordnet, so dass die Länge c des Fixierabschnitts 41 bis zum Ende der Öffnung 27 gemessen ist.

Die benachbarte, zweite schlüssellochförmige Öffnung 28 besitzt einen Aufsetzabschnitt 42 mit einer Länge d, die etwas kleiner als die Länge b des Aufsetzabschnitts 40 ist, und einen daran anschließenden Fixierabschnitt 43, dessen Länge e etwas größer als die Länge c des Fixierabschnitts 41 ist. Die an die zweite Öffnung 28 in Richtung auf das zweite Ende 61 anschließende dritte schlüssellochförmige Öffnung 29 besitzt einen Aufsetzabschnitt 44 mit einer Länge f, die etwas größer als die Länge d des Aufsetzabschnitts 42 ist und einen daran anschließenden Fixierabschnitt 45, dessen Länge g etwas größer als die Länge e des Fixierabschnitts 43 ist. Die benachbart zur dritten Öffnung 29 angeordnete vierte Öffnung 30 besitzt einen Aufsetzabschnitt 46 mit einer Länge h, die etwas kleiner als die Länge f des Aufsetzabschnitts 44 ist, sowie einen daran anschließenden Fixierabschnitt 47 mit einer Länge i, die etwas größer als die Länge g des Fixierabschnitts 45 ist.

Die benachbart zur schlüssellochförmigen Öffnung 30 angeordnete fünfte schlüssellochförmige Öffnung 31 besitzt einen Aufsetzabschnitt 48, dessen Länge j etwas kleiner als die Länge h des Aufsetzabschnitts 46 ist, sowie einen daran anschließenden Fixierabschnitt 49, dessen Länge k etwas größer als die Länge e ist. Die benachbart zur schlüssellochförmigen Öffnung 31 angeordnete sechste schlüssellochförmige Öffnung 32, die zwischen der Öffnung 31 und dem Ende 61 der Messerbalken 8, 9 angeordnet ist, besitzt einen Aufsetzabschnitt 50, dessen Länge 1 etwas kleiner als die Länge j des Aufsetzabschnitts 48 ist. Die Länge 1 entspricht vorteilhaft etwa dem Durchmesser des Kopfs 34 der Schraube 33. An den Aufsetzabschnitt 50 schließt sich ein Fixierabschnitt 51 an, dessen Länge m etwas größer als die Länge k des Fixierabschnitts 49 ist.

Mit steigendem Abstand vom ersten Ende 60 der Messerbalken 8, 9 verringert sich demnach die in Längsrichtung 70 gemessene Länge des Aufsetzabschnitts. In gleichem Maße vergrößert sich die Länge des benachbarten Fixierabschnitts. Die Differenz x zwischen den Abständen q und r benachbarter Befestigungselemente 71 und zugeordneter benachbarter Fixierabschnitte 41, 43, 45, 47, 49, 51 ist dabei vorteilhaft für alle Befestigungselemente 71 und Öffnungen 27, 28, 29, 30, 31, 32 gleich.

Bei der Montage der Messerbalken 8, 9 werden diese zunächst auf die Montagebolzen 25 aufgesetzt. Außerdem werden die Messerbalken mit ihren Langlöchern 58 und 36 auf die Schrauben 33 aufgesetzt, die bereits in die zweite Deckleiste 10 eingeschraubt sind. Die Langlöcher 58 und 36 sind dabei so breit ausgeführt, dass die Köpfe 34 der Schrauben 33 durch die Langlöcher 36, 58 hindurchgesteckt werden können. Anschließend wird die erste Deckleiste 11 mit den Aufsetzabschnitten 40, 42, 44, 46, 48, 50 in der in Fig. 7 gezeigten Position auf die Schrauben 33 aufgesetzt, bis die Köpfe 34 der Schrauben 33 durch die erste Deckleiste 11 ragen. Anschließend wird die Deckleiste 11 in Richtung des in Fig. 7 gezeigten Pfeils 55 in Richtung auf das Messerbalkengehäuse 12 bewegt. Die Figuren 8 bis 11 zeigen die Deckleiste 11 beim Verschieben in Richtung des Pfeils 55. Bei der in Fig. 8 gezeigten Stellung ist die Schraube 33 in der sechsten Öffnung 32 bereits im Fixierabschnitt 51 angeordnet. Die den Fixierabschnitt 51 begrenzenden Seiten der Deckleiste 11 hintergreifen den Befestigungsabschnitt 71 des Kopfs 34 und sichern so die Deckleiste 11 und die Messerbalken 8 und 9 in Längsrichtung der Schraube 33 an der zweiten Deckleiste 10. Die Schraube 33 in der Öffnung 31 befindet sich am Übergang vom Aufsetzabschnitt 48 zum Fixierabschnitt 49 und wird ebenfalls bereits teilweise von der ersten Deckleiste 11 hintergriffen. Die Schraube 33 in der vierten Öffnung 30 befindet sich noch im Aufsetzabschnitt 46. Auch die Schrauben 33 in den Öffnungen 27, 28 und 29 sind in jeweils zugeordneten Aufsetzabschnitten 40, 42, 44 angeordnet. Von den Schrauben 33 sind in den Fig. 6 bis 11 dabei jeweils die Köpfe 34 gezeigt.

Wie Fig. 8 zeigt, besitzen die den zugeordneten Fixierabschnitten 41, 43, 45, 47, 49, 51 in dem in Fig. 7 gezeigten nicht fixierten Zustand der Deckleiste 11 zugewandten Seiten 72 der Befestigungsabschnitte 71 jeweils einen Abstand q zueinander. Die den Aufsetzabschnitten 40, 42, 44, 46, 48, 50 zugewandten Seiten 73 benachbarter Fixierabschnitte 41, 43, 45, 47, 49, 61 besitzen zueinander einen Abstand r. Die Differenz x der Abstände q und r ist dabei für alle Öffnungen 27, 28, 29, 30, 31, 32 gleich. Die Abstände q und r können für unterschiedliche Öffnungen 27, 28, 29, 30, 31, 32 und unterschiedliche Befestigungsabschnitte 71 unterschiedlich sein. Für die Abstände q und r ist jeweils der Bereich von Befestigungselement 71 und Fixierabschnitt 41, 43, 45, 47, 49, 51 maßgeblich, der zuerst eine Fixierung in Längsrichtung der Schraube 33 bewirkt.

Bei weiterem Verschieben der ersten Deckleiste 11 in Richtung des Pfeils 55 in die in Fig. 9 gezeigte Stellung gelangt auch die Schraube 33 in der Öffnung 30 in den Fixierabschnitt 47. Die Schraube 33 in der Öffnung 29 ist am Übergang vom Aufsetzabschnitt 44 zum Fixierabschnitt 45 angeordnet und teilweise von der Deckleiste 11 hintergriffen. Die Schrauben 33 in den Fixierabschnitten 49 und 51 bewegen sich in den Fixierabschnitten weiter.

Bei der in Fig. 10 gezeigten Stellung der ersten Deckleiste 11 ist nur die Schraube 33 in der ersten Öffnung 27 noch vollständig im Aufsetzabschnitt 40 angeordnet. Alle weiteren Köpfe 34 der Schrauben 33 in den Öffnungen 28 bis 32 sind von der Deckleiste 11 hintergriffen.

Fig. 11 zeigt die Anordnung der Deckleiste 11 in vollständig montierter Stellung. In dieser Stellung sind alle Schrauben 33 in den zugeordneten Fixierabschnitten angeordnet, und die Deckleiste 11 hintergreift die Köpfe 34 der Schrauben33. In dieser Stellung sind die Messerbalken 8 und 9 in Längsrichtung der Schrauben 33 an der zweiten Deckleiste 10 fixiert. Dadurch können die Messerbalken 8 und 9 nicht mehr von dem Montagebolzen 25 abrutschen. Zur Sicherung der Position der ersten Deckleiste 11 ist die Sicherungsschraube 56 vorgesehen, die die erste Deckleiste 11 durchragt und die in die zweite Deckleiste 10 eingeschraubt ist. Dadurch kann die erste Deckleiste 11 nicht mehr in Längsrichtung 70 verschoben werden.

Wie Fig. 12 zeigt, kann zur Sicherung der Position der ersten Deckleiste 11 auch eine Sicherungsfeder 53 vorgesehen sein, die über eine der Schrauben 33 an der zweiten Deckleiste 10 fixiert ist. Die Sicherungsfeder 53 kann auch über ein zusätzliches Befestigungsmittel an der ersten Deckleiste 11 fixiert sein.

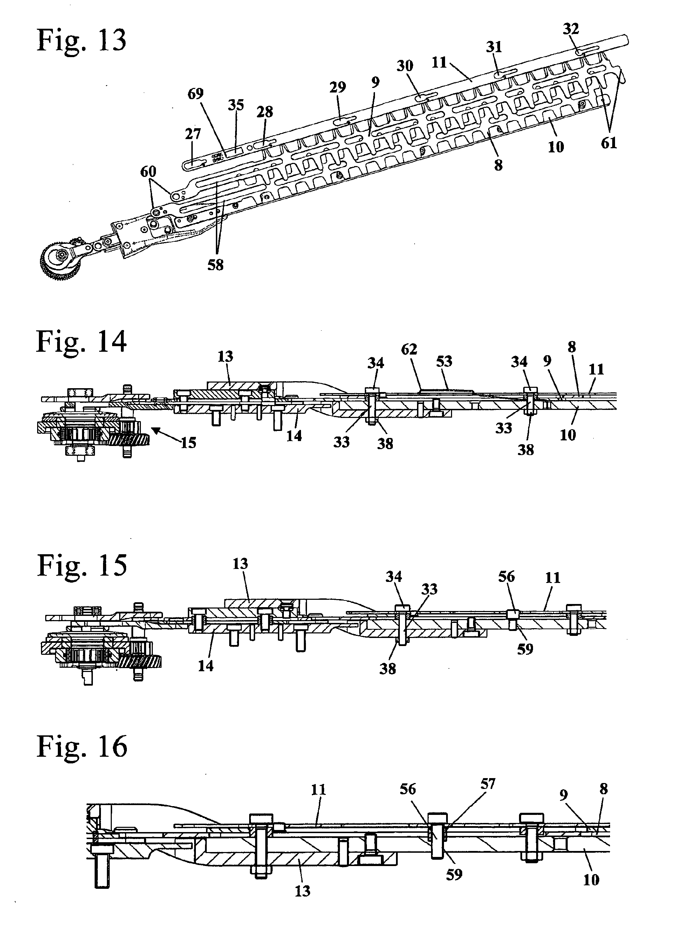

Wie Fig. 14 zeigt, besitzt die Sicherungsfeder 53 eine dem ersten Ende 60 der Messerbalken 8, 9 (Fig. 13) zugewandte Kante 62, die eine Kante 69 der Sicherungsöffnung 35 (Fig. 13) hintergreift und an dieser einrastet. Auch durch die Sicherungsfeder 53 kann ein unbeabsichtigtes Verschieben der ersten Deckleiste 11 verhindert werden.

Fig. 15 zeigt die Anordnung der Sicherungsschraube 56 im Einzelnen. Die Sicherungsschraube 56 besitzt einen verbreiterten Kopf, der durch das in Fig. 5 gezeigte Loch 68 der ersten Deckleiste 11 ragt. Der Durchmesser des Lochs 68 ist vorteilhaft nur geringfügig größer als der Durchmesser des Kopfs der Schraube 56, so dass die Deckleiste 11 durch den Kopf der Schraube 56 formschlüssig gesichert ist.

Fig. 16 zeigt eine weitere Ausführungsvariante der Sicherung der Deckleiste 11. Hier ist an der Schraube 56 eine Sicherungshülse 57 vorgesehen, deren über die Deckleiste 10 überstehende Höhe mindestens etwa der gemeinsamen Dicke der Messerbalken 8 und 9 entspricht. Der Durchmesser des Kopfs der Sicherungsschraube 56 ist etwas größer als der Durchmesser des Lochs 68 (Fig. 5) in der Deckleiste 11. Der Durchmesser des Lochs 68 ist etwa so groß oder etwas größer als der Nenndurchmesser der Sicherungsschraube 56. Die Sicherungsschraube 56 ist in die Deckleiste 11 eingeschraubt. Der Kopf der Schraube 56 ist an der Außenseite der ersten Deckleiste 11 angeordnet und sichert die Deckleiste 11 kraftschlüssig und formschlüssig.

## Patentansprüche

1. Handgeführtes Arbeitsgerät mit einem Antriebsmotor (6) und mit mindestens zwei Messerbalken (8, 9), wobei mindestens einer der Messerbalken (8, 9) von dem Antriebsmotor (6) hin- und hergehend angetrieben ist, mit einer ersten Deckleiste (11), die an einer Längsseite eines der Messerbalken (9) angeordnet ist, und die mindestens eine erste schlüssellochförmige Öffnung (27, 28, 29, 30, 31) und eine zweite schlüssellochförmige Öffnung (28, 29, 30, 31, 32) besitzt, und mit mindestens zwei Befestigungselementen, die durch die Messerbalken (8, 9) und die erste Deckleiste (11) ragen, wobei jede schlüssellochförmige Öffnung (27, 28, 29, 30, 31, 32) einen Aufsetzabschnitt (40, 42, 44, 46, 48, 50) mit einer ersten Breite (n) besitzt, die mindestens so groß wie die Breite (p) eines an der ersten Deckleiste (11) angeordneten Befestigungsabschnitts (71) des Befestigungselements ist, und wobei jede schlüssellochförmige Öffnung (27, 28, 29, 30, 31, 32) einen Fixierabschnitt (41, 43, 45, 47, 49, 51) mit einer zweiten Breite (o) besitzt, die kleiner als die Breite (p) des Befestigungsabschnitts (71) des Befestigungselements ist, wobei die Fixierabschnitte (41, 43, 45, 47, 49, 51) den Befestigungsabschnitt (71) des durch den Fixierabschnitt (41, 43, 45, 47, 49, 51) ragenden Befestigungselements in fixiertem Zustand der ersten Deckleiste (11) mindestens teilweise hintergreifen, wobei die dem Aufsetzabschnitt (40, 42, 44, 46, 48) zugewandte Seite (73) des Fixierabschnitts (41, 43, 45, 47, 49) der ersten Öffnung (27, 28, 29, 30, 31) zu der dem Aufsetzabschnitt (42, 44, 46, 48, 50) zugewandten Seite (73) des Fixierabschnitts (43, 45, 47, 49, 51) der zweiten Öffnung (28, 29, 30, 31, 32) einen ersten Abstand (r) besitzt,
**dadurch gekennzeichnet, dass** die dem Fixierabschnitt (41, 43, 45, 47, 49) in nicht fixiertem Zustand der Deckleiste (11) zugewandte Seite (72) des Befestigungsabschnitts (71) des ersten Befestigungselements zu der dem Fixierabschnitt (43, 45, 47, 49, 5 1) zugewandten Seite (72) des Befestigungsabschnitts (71) des zweiten Befestigungselements einen zweiten Abstand (q) besitzt, der größer als der erste Abstand (r) ist.

2. Arbeitsgerät nach Anspruch 1,
**dadurch gekennzeichnet, dass** die erste Deckleiste (11) mehr als zwei Öffnungen (27, 28, 29, 30, 31, 32) besitzt.

3. Arbeitsgerät nach Anspruch 2,
**dadurch gekennzeichnet, dass** die Differenz zwischen dem ersten Abstand (r) benachbarter Öffnungen (27, 28, 29, 30, 31, 32) und dem zweiten Abstand (q) zugeordneter benachbarter Befestigungselemente für alle Öffnungen (27, 28, 29, 30, 31, 32) gleich groß ist.

4. Arbeitsgerät nach Anspruch 2 oder 3,
**dadurch gekennzeichnet, dass** die Messerbalken (8, 9) ein erstes, einem Gehäuse (2) des Arbeitsgeräts zugewandtes Ende (60) und ein zweites, dem Gehäuse (2) des Arbeitsgeräts abgewandtes Ende (61) besitzen.

5. Arbeitsgerät nach Anspruch 4,
**dadurch gekennzeichnet, dass** die Länge (c, e, g, i, k, m) der Fixierabschnitte (41, 43, 45, 47, 49, 51) der Öffnungen (27, 28, 29, 30, 31, 32) vom Aufsetzabschnitt (40, 42, 44, 46, 48, 50) bis zu der Position, in der sich das Befestigungselement bei fixierter erster Deckleiste (11) befindet, umso größer ist, je weiter die Öffnung (27, 28, 29, 30, 31, 32) vom ersten Ende (60) entfernt ist.

6. Arbeitsgerät nach Anspruch 5,
**dadurch gekennzeichnet, dass** die Differenz der Längen (c, e, g, i, k, m) der Fixierabschnitte (41, 43, 45, 47, 49, 51) benachbarter schlüssellochförmiger Öffnungen (27, 28, 29, 30, 31, 32) für alle benachbarten Öffnungen (27, 28, 29, 30, 31, 32) gleich ist.

7. Arbeitsgerät nach einem der Ansprüche 1 bis 6,
**dadurch gekennzeichnet, dass** die Gesamtlänge (a) von Aufsetzabschnitt (40, 42, 44, 46, 48, 50) und Fixierabschnitt (41, 43, 45, 47, 49, 51) für alle schlüssellochförmigen Öffnungen (27, 28, 29, 30, 31, 32) etwa gleich ist.

8. Arbeitsgerät nach einem der Ansprüche 1 bis 7,
**dadurch gekennzeichnet, dass** die erste Deckleiste (11) über ein Sicherungsmittel in ihrer Lage gesichert ist.

9. Arbeitsgerät nach Anspruch 8,
**dadurch gekennzeichnet, dass** das Sicherungsmittel ein gegenüber einem Gehäuse (2) des Arbeitsgeräts fixiertes Rastelement ist, das in fixierter Stellung der ersten Deckleiste (11) in einer Sicherungsöffnung (35) in der ersten Deckleiste (11) eingerastet ist.

10. Arbeitsgerät nach Anspruch 9,
**dadurch gekennzeichnet, dass** das Sicherungsmittel eine Sicherungsschraube (56) ist, die in ein mit dem Gehäuse (2) des Arbeitsgeräts fest verbundenes Bauteil eingeschraubt ist und die die erste Deckleiste (11) gegenüber dem Gehäuse (2) fixiert.

11. Arbeitsgerät nach einem der Ansprüche 8 bis 10,
**dadurch gekennzeichnet, dass** das Arbeitsgerät eine zweite Deckleiste (10) besitzt, die an der der ersten Deckleiste (11) gegenüberliegenden Seite der Messerbalken (8, 9) angeordnet ist und die an einem Gehäuseteil des Arbeitsgeräts fixiert ist.

12. Arbeitsgerät nach Anspruch 11,
**dadurch gekennzeichnet, dass** das Sicherungsmittel an der zweiten Deckleiste (10) fixiert ist.

13. Arbeitsgerät nach einem der Ansprüche 1 bis 12,
**dadurch gekennzeichnet, dass** das Arbeitsgerät ein Getriebe (15) besitzt, über das mindestens einer der Messerbalken (8, 9) angetrieben ist, wobei der mindestens eine hin- und hergehend angetriebene Messerbalken (8, 9) eine Montageöffnung (26) besitzt, mit der er auf ein mit dem Getriebe (15) in Wirkverbindung stehendes Koppelelement aufgesetzt ist.

14. Arbeitsgerät nach Anspruch 13,
**dadurch gekennzeichnet, dass** das Koppelelement ein Montagebolzen (25) ist.

15. Arbeitsgerät nach Anspruch 13 oder 14,
**dadurch gekennzeichnet, dass** die erste Deckleiste (11) den mindestens einen angetriebenen Messerbalken (8, 9) an dem Koppelelement sichert.

## Claims

1. Hand-guided working implement, comprising a drive motor (6) and at least two cutting bars (8, 9), at least one of the cutting bars (8, 9) being driven by the drive motor (2) in a reciprocating motion, further comprising a first cover strip (11), which is located at a long side of one of the cutting bars (9) and which has at least one first keyhole-shaped opening (27, 28, 29, 30, 31) and one second keyhole-shaped opening (28, 29, 30, 31, 32), and further comprising at least two fastening elements which extend through the cutting bars (8, 9) and the first cover strip (11), wherein each keyhole-shaped opening (27, 28, 29, 30, 31, 32) has a positioning section (40, 42, 44, 46, 48, 50) with a first width (n) which is at least equal to the width (p) of a fastening section (71) of the fastening element on the first cover strip (11), and wherein each keyhole-shaped opening (27, 28, 29, 30, 31, 32) has a fixing section (41, 43, 45, 47, 49, 51) with a second width (o) which is less than the width (p) of the fastening section (71) of the fastening element, wherein the fixing sections (41, 43, 45, 47, 49, 51) at least partially engage the fastening section (71) of the fastening element extending through the fixing section (41, 43, 45, 47, 49, 51) from behind in the fixed state of the first cover strip (11), wherein the side (73) of the fixing section (41, 43, 45, 47, 49) of the first opening (27, 28, 29, 30, 31) which faces the positioning section (40, 42, 44, 46, 48) has a first distance (r) from the side (73) of the fixing section (43, 45, 47, 49, 51) of the second opening (28, 29, 30, 31, 32) which faces the positioning section (42, 44, 46, 48, 50),
**characterised in that** the side (72) of the fastening section (71) of the first fastening element which faces the fixing section (41, 43, 45, 47, 49) in the non-fixed state of the cover strip (11) has a second distance (q) from the side (72) of the fastening section (71) of the second fastening element which faces the fixing section (43, 45, 47, 49, 51), the distance (q) being greater than the first distance (r).

2. Working implement according to claim 1,
**characterised in that** the first cover strip (11) has more than two openings (27, 28, 29, 30,31,32).

3. Working implement according to claim 2,
**characterised in that** the difference between the distance (r) of adjacent openings (27, 28, 29, 30, 31, 32) and the second distance (q) of associated adjacent fastening elements is identical for all openings (27, 28, 29, 30, 31, 32).

4. Working implement according to claim 2 or 3,
**characterised in that** the cutting bars (8, 9) have a first end (60) facing a housing (2) of the working implement and a second end (61) remote from the housing (2) of the working implement.

5. Working implement according to claim 4,
**characterised in that** the length (c, e, g, i, k, m) of the fixing sections (41, 43, 45, 47, 49, 51) of the openings (27, 28, 29, 30, 31, 32) from the positioning section (40, 42, 44, 46, 48, 50) to the position in which the fastening element is when the first cover strip (11) is fixed is the greater the farther the opening (27, 28, 29, 30, 31, 32) is distant from the first end (60).

6. Working implement according to claim 5,
**characterised in that** the difference between the lengths (c, e, g, i, k, m) of the fixing sections (41, 43, 45, 47, 49, 51) of adjacent keyhole-shaped openings (27, 28, 29, 30, 31, 32) is identical for all adjacent openings (27, 28, 29, 30, 31, 32).

7. Working implement according to any of claims 1 to 6,
**characterised in that** the overall length (a) of positioning section (40, 42, 44, 46, 48, 50) and fixing section (41, 43, 45, 47, 49, 51) is approximately identical for all keyhole-shaped openings (27, 28, 29, 30, 31, 32).

8. Working implement according to any of claims 1 to 7,
**characterised in that** the first cover strip (11) is secured in its position by a securing means.

9. Working implement according to claim 8,
**characterised in that** the securing means is a latching element which is fixed relative to a housing (2) of the working implement and which is latched into a securing opening (35) in the first cover strip (11) in the fixed position of the first cover strip (11).

10. Working implement according to claim 9,
**characterised in that** the securing means is a securing bolt (56), which is tightened into a component permanently joined to the housing (2) of the working implement and which fixes the first cover strip (11) relative to the housing (2).

11. Working implement according to any of claims 8 to 10,
**characterised in that** the working implement comprises a second cover strip (10), which is located on the side of the cutting bars (8, 9) opposite the first cover strip (11) and which is fixed to a housing part of the working implement.

12. Working implement according to claim 11,
**characterised in that** the securing means is fixed to the second cover strip (10).

13. Working implement according to any of claims 1 to 12,
**characterised in that** the working implement comprises a transmission (15), via which at least one of the cutting bars (8, 9) is driven, the at least one cutting bar (8, 9) driven in a reciprocating motion having a mounting opening (26), by way of which it is placed on a coupling element connected for action to the transmission (15).

14. Working implement according to claim 13,
**characterised in that** the coupling element is a mounting bolt (25).

15. Working implement according to claim 13 or 14,
**characterised in that** the first cover strip (11) secures the at least one driven cutting bar (8, 9) to the coupling element.

## Revendications

1. Appareil tenu à la main, avec un moteur d'entraînement (6) et au moins deux lames (8, 9), étant précisé que l'une au moins des lames (8, 9) est entraînée par le moteur d'entraînement (6) suivant un mouvement de va-et-vient, avec une première baguette de recouvrement (11) qui est disposée sur un côté longitudinal de l'une des lames (9) et qui présente au moins une première ouverture en forme de trou de serrure (27, 28, 29, 30, 31) et une seconde ouverture en forme de trou de serrure (28, 29, 30, 31, 32), et avec au moins deux éléments de fixation qui traversent les lames (8, 9) et la première barre de recouvrement (11), que chaque ouverture en forme de trou de serrure (27, 28, 29, 30, 31, 32) comporte une partie de pose (40, 42, 44, 46, 48, 50) avec une première largeur (n) qui est au moins aussi grande que la largeur (p) d'une partie de fixation (71), disposée sur la première bordure de recouvrement (11), de l'élément de fixation, et que chaque ouverture en forme de trou de serrure (27, 28, 29, 30, 31, 32) comporte une partie de fixation (41, 43, 45, 47, 49, 51) avec une seconde largeur (o) qui est plus petite que la largeur (p) de la partie de fixation (71) de l'élément de fixation, que les parties de fixation (41, 43, 45, 47, 49, 51) viennent s'accrocher au moins en partie derrière la partie de fixation (71) de l'élément de fixation qui traverse la partie de fixation (41, 43, 45, 47, 49, 51), dans l'état fixé de la première bordure de recouvrement (11), que le côté (73), tourné vers la partie de pose (40, 42, 44, 46, 48), de la partie de fixation (41, 43, 45, 47, 49) de la première ouverture (27, 28, 29, 30, 31) présente un premier écartement (r) par rapport au côté (73), tourné vers la partie de pose (42, 44, 46, 48, 50), de la partie de fixation (43, 45, 47, 49, 51) de la seconde ouverture (28, 29, 30, 31, 32),
**caractérisé en ce que** le côté (72), tourné vers la partie de fixation (41, 43, 45, 47, 49) dans l'état non fixé de la bordure de recouvrement (11), de la partie de fixation (71) du premier élément de fixation présente par rapport au côté (72), tourné vers la partie de fixation (43, 45, 47, 49, 51), de la partie de fixation (71) du second élément de fixation un second écartement (q) qui est plus grand que le premier écartement (r).

2. Appareil selon la revendication 1,
**caractérisé en ce que** la première bordure de recouvrement (11) comporte plus de deux ouvertures (27, 28, 29, 30, 31, 32).

3. Appareil selon la revendication 2,
**caractérisé en ce que** la différence entre le premier écartement (r) d'ouvertures (27, 28, 29, 30, 31, 32) voisines et le second écartement (q) d'éléments de fixation voisins associés est la même pour toutes les ouvertures (27, 28, 29, 30, 31, 32).

4. Appareil selon la revendication 2 ou 3,
**caractérisé en ce que** les lames (8, 9) comportent une première extrémité (60) tournée vers un carter (2) de l'appareil, et une seconde extrémité (61) opposée au carter (2) de l'appareil.

5. Appareil selon la revendication 4,
**caractérisé en ce que** la longueur (c, e, g, i, k, m) des parties de fixation (41, 43, 45, 47, 49, 51) des ouvertures (27, 28, 29, 30, 31, 32), de la partie de pose (40, 42, 44, 46, 48, 50) jusqu'à la position dans laquelle l'élément de fixation se trouve quand la première bordure de recouvrement (11) est fixée, est d'autant plus grande que l'ouverture (27, 28, 29, 30, 31, 32) est éloignée de la première extrémité (60).

6. Appareil selon la revendication 5,
**caractérisé en ce que** la différence des longueurs (c, e, g, i, k, m) des parties de fixation (41, 43, 45, 47, 49, 51) d'ouvertures en forme de trou de serrure (27, 28, 29, 30, 31, 32) voisines est la même pour toutes les ouvertures (27, 28, 29, 30, 31, 32).

7. Appareil selon l'une des revendications 1 à 6,
**caractérisé en ce que** la longueur totale (a) de la partie de pose (40, 42, 44, 46, 48, 50) et de la partie de fixation (41, 43, 45, 47, 49, 51) est à peu près la même pour toutes les ouvertures en forme de trou de serrure (27, 28, 29, 30, 31, 32).

8. Appareil selon l'une des revendications 1 à 7,
**caractérisé en ce que** la première bordure de recouvrement (11) est bloquée dans sa position grâce à un moyen de blocage.

9. Appareil selon la revendication 8,
**caractérisé en ce que** le moyen de blocage est un élément d'enclenchement qui est fixé par rapport à un carter (2) de l'appareil et qui, dans la position fixée de la première bordure de recouvrement (11), est enclenché dans la première bordure de recouvrement (11) dans une ouverture de blocage (35).

10. Appareil selon la revendication 9,
**caractérisé en ce que** le moyen de blocage est une vis de blocage (56) qui est vissée dans un élément relié solidement au carter (2) de l'appareil et qui fixe la première bordure de recouvrement (11) par rapport au carter (2).

11. Appareil selon l'une des revendications 8 à 10,
**caractérisé en ce que** l'appareil comporte une seconde bordure de recouvrement (10) qui est disposée sur le côté des lames (8, 9) opposé à la première bordure de recouvrement (11) et qui est fixée à un élément de carter de l'appareil.

12. Appareil selon la revendication 11,
**caractérisé en ce que** le moyen de blocage est fixé à la seconde bordure de recouvrement (10).

13. Appareil selon l'une des revendications 1 à 12,
**caractérisé en ce que** l'appareil comporte une transmission (15) par l'intermédiaire de laquelle l'une au moins des lames (8, 9) est entraînée, étant précisé que la ou les lames (8, 9) entraînées suivant un mouvement de va-et-vient comportent une ouverture de montage (26) avec laquelle elles sont posées sur un élément d'accouplement en relation fonctionnelle avec la transmission (15).

14. Appareil selon la revendication 13,
**caractérisé en ce que** l'élément d'accouplement est un axe de montage (25).

15. Appareil selon la revendication 13 ou 14,
**caractérisé en ce que** la première bordure de recouvrement (11) bloque la ou les lames entraînées (8, 9) sur l'élément d'accouplement.
